# EUROPÄISCHE PATENTANMELDUNG

(11) **EP 3 207 786 A1**
(43) Veröffentlichungstag der Anmeldung: **23.08.2017**
(21) Anmeldenummer: 16168029.3
(22) Anmeldetag: 03.05.2016
(51) Int. Cl.: A01D 89/00

(54) **AUFNAHMEVORRICHTUNG FÜR ERNTEGUT**

(30) Priorität: 19.02.2016 DE 102016102916
(71) Anmelder: B. Strautmann & Söhne GmbH u. Co. KG, 49196 Bad Laer (DE)
(72) Erfinder: Strautmann, Wolfgang, 49196 Bad Laer (DE); Quebe, Friedrich, 49448 Brockum (DE)
(74) Vertreter: Meissner Bolte Partnerschaft mbB

(57) **Zusammenfassung**

Die Erfindung betrifft eine drehbare, in eine landwirtschaftliche Erntemaschine eingebaute oder einbaubare Aufnahmevorrichtung (100) für Erntegut, umfassend:
- eine walzenförmige Trommel (2),
- eine Vielzahl von an der Trommel (2) angeordneten, über eine Mantelfläche (4) der Trommel (2) abstehenden, aus elastischem Kunststoff bestehenden Förderzinken (3), welche jeweils eine Spitze (7) und eine der Spitze (7) abgewandte Zinkenbasis (8) aufweisen,
- wobei die Förderzinken (3) an der Trommel (2) derart verteilt sind, dass sie mehrere nebeneinander liegende, voneinander beanstandete Zinken-Ringe (10, 10') bilden,
- wobei zwischen sich benachbarten Zinken-Ringen (10, 10') Zwischenräume (11) zur Aufnahme von Abstreifern (12, 12') vorgesehen sind.

Gemäß Erfindung läuft die Förderzinke (3) mit ihrer Zinkenbasis (8) in einen Sockel (5) aus. Die Zinkenringe (10, 10') umfassen wenigstens zwei Förderzinken (3) deren Sockel eine geschlossene Kontur ausbilden. Zwischen den Zinkenringen (10, 10') verbleiben Zwischenräume (11), die umlaufende Nuten (39) bilden, in denen die Abstreifer (12, 12') abtauchen können.

Zur Bildung eines Zinken-Ringes (10, 10') können weiterhin zinkenlose Zwischensegmente (16) vorgesehen sein.

## Beschreibung

Die Erfindung betrifft eine drehbare, in eine landwirtschaftliche Erntemaschine eingebaute oder einbaubare Aufnahmevorrichtung für Erntegut, umfassend:
- eine walzenförmige, an einer Antriebswelle gelagerte Trommel,
- eine Vielzahl von an der Trommel angeordneten, über eine Mantelfläche der Trommel abstehende, aus elastischem Kunststoff bestehende, Förderzinken, welche jeweils eine Spitze und eine der Spitze abgewandte Zinkenbasis aufweisen,
- wobei die Förderzinken an der Trommel derart verteilt sind, dass sie mehrere nebeneinander liegende, voneinander beanstandete Zinkenringe bilden,
- wobei zwischen sich benachbarten Zinkenringen Zwischenräume zur Aufnahme von Abstreifern vorgesehen sind.

Die Erfindung betrifft weiterhin eine landwirtschaftliche Erntemaschine mit einer solchen Aufnahmevorrichtung sowie ein Zinkensegement für einen Zinkenring einer solchen Aufnahmevorrichtung.

Eine Aufnahmevorrichtung der eingangs genannten Art, Pick-up genannt, ist in DE 100 21 748 A1 offenbart worden. An der Trommel sind hervorstehende, einzelne Förderzinken so verteilt, dass sie ringförmige, voneinander beabstandete Förderzinken-Gruppen bilden. Die aus einem elastischen Material, wie Gummi, gefertigte Förderzinke, Finger genannt, hat die Form eines sich in Richtung Trommel verbreitenden Walzenkörpers. Dementsprechend verbreitern sich auch die Zwischenräume in Richtung Spitze der Förderzinken.

Im Ernteeinsatz nimmt die rotierende Trommel das Erntegut mittels der Finger auf. Dabei lagert sich das Erntegut zwischen den Fingern auf der Trommel ab. Um das Erntegut weiter zu fördern muss es von der Pick-up abgelöst und nachfolgenden Aggregaten zugeführt werden. Die Ablösung des Ernteguts von der Pick-up erfolgt durch eine gegenüber der rotierenden Pick-up-Trommel starr angeordneten Abstreifern, die gemeinsam einen Abstreifkamm bilden. Da lediglich die Finger aus der Mantelfläche der Trommel hervorragen, kann es zu Problemen kommen, wenn sich Erntegut zwischen radial benachbarten Förderzinken auf der Mantelfläche der Trommel absetzt. Das Erntegut kann dann unter Umständen von den Abstreifern nicht vollständig untergriffen werden und der Gutsfluss wird gestört.

Zwar ist in DE 100 21 748 A1 die Art und Weise der Befestigung der Förderzinken an der Trommel nicht beschrieben, jedoch lässt die in den Figuren dargestellte Anordnung vermuten, dass die direkt an der Trommel angeordnete Förderzinke bei größeren, beispielsweise durch Fremdkörper verursachten, mechanischen Belastungen und Schmutzansammlungen trotz ihrer Elastizität an der Kontaktstelle mit der Trommel brechen kann. Dies kann zu einem erheblichen Arbeitsaufwand und Betriebsausfall beim Einsetzen einer neuen Förderzinke führen.

Es stellt sich daher die Aufgabe, eine neuartige Aufnahmevorrichtung der im Oberbegriff beschriebenen Art zu entwickeln, derer Förderzinken einfach austauschbar sind und die zudem eine verbesserte Übergabe des Ernteguts von der Pick-up-Trommel an nachgeordnete Baugruppen ermöglicht. Die Förderzinken sollen zudem so konzipiert sein, dass sie beim Auftreffen auf einen Fremdkörper, beispielsweise einen Stein, partiell ausweichen können.

Diese Aufgabe wird durch eine Aufnahmevorrichtung mit den Merkmalen des Anspruchs 1 gelöst. Die Aufgabe wird weiterhin gelöst durch eine Erntemaschine mit einer solchen Aufnahmevorrichtung und durch ein Zinkensegment für einen Zinkenring.

Erfindungswesentlich ist, dass die Förderzinken auf der Trommel Ringe bilden, zwischen denen Zwischenräume verbleiben, die im Wesentlichen U-förmige, kanalartige Nuten ausbilden. Da das Erntegut in der Regel aus halmartigen Strukturen besteht und eine Art Teppich ausbildet, stützt es sich, wenn es im Ernteeinsatz von den Förderzinken erfasst wird, auf den Zinkenringen bzw. den Sockeln der Zinkenringe ab und dringt nicht oder nur in geringem Umfang, in die Zwischenräume ein. Die Zwischenräume bleiben somit frei von Futter und der ganze Erntegut-Teppich kann widerstandarm von den Abstreifern untergriffen werden. Dies gilt sowohl für eine Aufnahmevorrichtung mit einem Abstreifkamm, dessen einzelne Abstreifer Spitzen aufweisen, die in den genannten Zwischenräumen auslaufen und sich dort an die Oberfläche der Trommel anschmiegen als auch für Aufnahmevorrichtungen mit Abstreifern, die den Trommelmantel umlaufen und dementsprechend keine Spitze aufweisen.

In einer ersten Ausführungsform können die Zinkenringe einstückig ausgebildet sein und unlösbar in die Zinkenringe integrierte Zinkensegmente umfassen. Grundsätzlich ist es möglich, dass die Ringe schon vor der Montage auf die Trommel eine geschlossene Ringkontur aufweisen. Sie müssen in diesem Fall bei der Montage von der Seite her über die Trommel geschoben werden. Insbesondere bei Zinkenringen mit unlösbar integrierten Zinkensegmenten wird jedoch eine einstückige Ausführungsform bevorzugt, die eine Öffnungsstelle aufweist. Zur Montage wird diese Öffnungsstelle so weit aufgeweitet, dass die Öffnungsweite größer ist als der Durchmesser der Trommel. Der Zinkenring kann somit bei der Montage über die Trommel gestülpt werden. Vorteil dieser Bauweise ist, dass im Bedarfsfall, zum Beispiel bei einer Reparatur, jeder Zinkenring unabhängig von den anderen Zinkenringen und ohne Demontage der Trommel austauschbar ist.

Es ist nicht ausgeschlossen, dass die Zinkenringe nach ihrer Montage z.B. durch eine Schweißverbindung unlösbar mit der Trommel verbunden werden. Die Reparaturfreundlichkeit wird jedoch verbessert, wenn die einzelnen Zinkenringe austauschbar sind und/oder die in den Zinkenringen integrierten Zinkensegemente nicht fest, sondern lösbar mit den Zinkenringen verbunden sind.
Die Zinkenringe können einstückig oder segmentiert ausgebildet sein. Die Segmentierung kann tortenstückartig sein, so dass die einzelnen Segmente keinen geschlossenen Ring bilden, sie kann aber auch schichtartig sein, soc dass der Zinkenring in zwei geschlossene Teilringe unterteilt wird.. Ein tortenstückartig segmentierter Zinkenring umfasst demnach wenigstens zwei miteinander montierbare Teilringe. Die Segmentierung der Zinkenringe ist von großem Vorteil, da sie eine schnelle Demontage einer einzelnen, beispielsweise beschädigten, Förderzinke ermöglicht, ohne dass der ganze Zinkenring abgenommen werden muss.

Bei einem durch zwei Ringteil-Segmente gebildeten Zinkenring mit insgesamt acht Einzelzinken weisen die beiden Ringteile vorzugsweise jeweils vier Einzelzinken auf. Sind drei Ringteile und beispielsweise neun Einzelzinken vorgesehen, weist jedes Ringteil vorzugsweise drei Einzelzinken auf. Weiterhin kann vorgesehen sein, dass die Anzahl der Ringteile der Anzahl der Einzelzinken entspricht, jedes Ringteil also jeweils mit einem Förderzinken ausgestattet ist. Ein Ringteil mit einem Förderzinken wird im Folgenden auch als Zinkensegement bezeichnet. Ein Zinkensegement kann bis an den Trommelmantel heranreichen, es kann aber auch so ausgeführt sein, dass es an den Zinkenring angebracht, beispielsweise in eine zur Anbringung vorgesehen Vertiefung im Zinkenring eingesetzt wird.

Besonders bevorzugt ist eine Zinkenring-Ausführungsform, bei der in Ergänzung zu den Zinkensegmenten, bzw. zwischen diesen, zinkenlose Zwischensegmente vorgesehen sind. Der Einsatz von zusätzlichen Zwischensegmenten ist von besonderem Vorteil, weil hierdurch eine Vereinheitlichung der Zinkensegmente ermöglicht wird. Die Zwischensegemente können - in einer senkrecht zur Längsrichtung der Trommel gerichteten Ebene gesehen - eine gekrümmte Oberfläche aufweisen, welche beidseitig jeweils in einen zurückversetzten Arm mit gekrümmter Auflagefläche übergeht, an der sich die eine Schulter des Zinkensegements abstützt. Die Schulter des Zinkensegments und der gekrümmte Arm des Sockels liegen dann im montierten Zustand übereinander und können gemeinsam mit der Trommel verbunden, insbesondere verschraubt, werden. In dieser Ausführungsform weist die Trommel somit Bohrungen zur Befestigung der Zinkenringe auf. Zinkentragenden Segmente und zinkenlosen Zwischensegmente bilden dann gemeinsam einen Zinkenring aus. Die an der Trommel eingebrachten Bohrungen können derart positioniert sein, dass sie Bohrungs-Paare bilden, welche jeweils an einer zur Trommelachse parallelen Mantellinie liegen. Die Bohrungen, oder, soweit vorgesehen, Bohrungspaare, können so angeordnet sein, dass sie zumindest auf einem Teil der Trommellänge unter Bildung einer spiralförmigen Windungslinie zueinander versetzt sind.

Weiterhin kann vorgesehen sein, dass die Zinkenringe auf der Trommel unterschiedlich weit voneinander beabstandet sind.

Vorteilhaft ist, wenn die Förderzinke in einem Materialstück zusammen mit einem Sockel gefertigt ist. Zwar ist auch eine metallene Ausführung möglich, bevorzugt wird jedoch eine Ausführung aus einem elastomeren, synthetischen Kunststoff, beispielsweise Polyurethan (PUR) oder Silikonkautschuk. Diese speziell für die Förderzinken gewählten Elastomere zeichnen sich durch eine sehr gute Gleiteigenschaft aus. Selbstverständlich können auch die Zwischensegmente aus solchen elastisch verformbaren Thermoplasten gefertigt sein. Da jedoch die elastische Eigenschaft bzw. die federnde Wirkung für die Zwischensegmente nicht unbedingt erforderlich ist, ist es auch möglich, die Zwischensegemente aus einem kostengünstigeren Kunststoff oder einem anderem Material herzustellen. Weiterhin ist es möglich, die Elastizität des ganzen Zinkensegmentes im Herstellungsprozess so einzustellen, dass die Zinkenbasis bzw. der Sockel gegenüber der Förderzinke oder deren Spitze weniger elastisch ist.

In einer besonderen Ausführungsform sind die Förderzinken und die Sockel lösbar miteinander verbunden. Die lösbare Verbindung kann beispielsweise realisiert werden, indem der Sockel eine Bohrung mit einer eingesetzten oder einvulkanisierten Gewindebuchse aufweist und der Förderzinken selbst an seinem Ende mit einem entsprechenden Gewinde ausgestattet ist. Insofern können für das Sockelteil und den Förderzinken selbst unterschiedliche Materialien gewählt werden, beispielsweise ein wenig elastischer Kunststoff für den Sockel und ein elastischer, hochfester Kunststoff für den Förderzinken selbst.

Weiterhin ist es möglich, eine lösbare Verbindung zwischen Zinkenring und Förderzinke zu realisieren, indem der Sockel des Förderzinkens so ausgeführt ist, dass er mit dem Zinkenring lösbar verbunden werden kann. Beispielsweise kann der Sockel eine Kontur aufweisen, die zu einer Aussparung im Zinkenring kompatibel ist und eine formschlüssige Verbindung realisiert. Die formschlüssige Verbindung kann so ausgeführt sein, dass der Sockel des Förderzinkens sich einerseits bei Drehung der Trommel im Arbeitseinsatz, also bei der Förderung von Erntegut, am Zinkenring abstützt und andererseits bei umgekehrter Belastung lösbar ist. Ein einzelner Zinken kann somit ausgetauscht werden, indem er gegen seine Arbeitseinsatz-Lastrichtung belastet wird. Hierzu kann beispielsweise eine Nut im Sockel vorgesehen sein, die eine elastische Verformung des an die Nut angrenzenden Sockelbereiches zulässt, so dass der so elastisch verformte Förderzinken aus seiner formschlüssigen Verbindungsstelle entnehmbar ist.

In einer bevorzugten Ausführungsform weisen die Zinkensegmente und die Zwischensegemente, soweit solche vorgesehen sind, einen Innenradius auf, welcher halb so groß ist, wie der Außendurchmesser der Trommel. Ein auf die Trommel aufmontierter Zinkenring umschließt die Trommel somit spielfrei und die Einzelteile lassen sich leicht montieren.

Die Trommel, auf der die Zinkenringe angebracht sind, kann rund sein oder eine Vieleckkontur aufweisen. Die Zinkenringe haben eine zur Trommelkontut kompatible Innenform, so dass sie auf die Trommel aufschiebbar und/oder an die Trommel montierbar sind. Für eine Trommel mit Vieleckkontur werden somit Zinkenringe bevorzugt, die eine zur Trommel kompatible Vieleckkontur aufweisen, so dass Zinkenringe und Trommel formschlüssig miteinander verbindbar sind und der Zinkenring durch die Vieleckkontur gegen Verdrehung auf der Trommel gesichert ist.

Der Zinkenring kann mehrteilig ausgeführt sein und einen Innenring und einen Außenring umfassen. In so einem Fall ist die Verwendung unterschiedlicher Materialen, beispielsweise Polyurethan für den Außenring und Stahl für den Innenring, möglich. Der Innenring weist die zur Trommel kompatible Kontur auf. Innenring und Außenring können unlösbar miteinander verbunden sein. Eine unlösbare Verbindung kann beispielsweise hergestellt werden, indem ein Metall-Innenring in einer Gießform angeordnet wird, in welche dann flüssiger Kunststoff gegossen wird.

Alternativ zu einer unlösbaren Verbindung kann auch eine lösbare Verbindung vorgesehen sein, beispielsweise in Form zueinander kompatibler Konturelemente an Außenring und Innenring. Der Innenring kann einstückig oder segmentiert ausgeführt sein. Insbesondere wenn zur Aufnahme des Innenrings eine nutartige Vertiefung an der Innenseite des Zinkenrings vorgesehen ist, wird durch eine segmentierte Bauweise des Innenrings das Einsetzen des Innenrings in die nutartige Vertiefung des Außenrings erleichtert.
Für eine schnelle, lösbare Anbringung der Zinkenringe an der Trommel ist es vorteilhaft, wenn die Zinkensegmente und Zwischensegmente Teilringe, beispielsweise Halbringe bilden, welche bereits vormontiert sind. Diese Teilringe können entweder aus zusammenmontierten Zinkensegmenten bestehen oder bereits einstückig hergestellt sein.

Vorzugsweise sind die Zinkenringe oder Teilringe bzw. einzelne Zinkensegmente auf die Trommel aufschraubbar.

Die Förderzinke kann prismatisch, teilprismatisch, walzen- oder teilwalzenförmig sein. Vorzugsweise hat sie die Form eines sich in Richtung Spitze verjüngenden, abgestumpften Obelisken, dessen zwei sich gegenüber liegende Seitenflächen plan und zueinander parallel sind.

Die Förderzinke kann radial oder geneigt, vorzugsweise nachlaufend geneigt, gegenüber dem Sockel ausgerichtet sein.

In einer vorteilhaften Ausführung sind die Zinkenringe auf der Trommel unterschiedlich weit voneinander beabstandet. Eine solche Gestaltung wird dadurch ermöglicht, dass bei der erfindungsgemäßen Aufnahmevorrichtung die Verwendung von Einzelzinken möglich ist. Bei den als Stand der Technik bekannten Aufnahmevorrichtungen werden in aller Regel sogenannte Doppelzinken aus Federstahldraht verwendet. Solche Doppelzinken weisen eine mittlere Windungsspirale auf, die an beiden Seiten in einem lang gestreckten Ende, dem eigentlichen Zinken, ausläuft. Die Verwendung solcher Doppelzinken hat zur Konsequenz, dass, bei Verwendung einheitlicher Zinken auf der gesamten Aufnahmetrommel, die Abstände zwischen den Zinken in Achsrichtung der Trommel immer gleich sind. Da alle Zinken gleich sind, die im Ernteeinsatz auftretende Belastung im mittleren Bereich der Aufnahmevorrichtung, also dort, wo in aller Regel das meiste Erntegut aufzunehmen ist, jedoch am Größten ist, ist die auf die einzelnen Zinken einwirkende Last unterschiedlich.

Bei der erfindungsgemäßen Aufnahmevorrichtung kann der Abstand der Zinken anforderungsgerecht angepasst werden. Es kann insbesondere vorgesehen sein, dass der Abstand zwischen zwei Zinkenringen im mittleren Bereich kleiner ist als in den Randbereichen. Hierdurch wird die Last im mittleren Bereich der Aufnahmetrommel auf eine größere Anzahl Förderzinken verteilt und damit für den einzelnen Zinken reduziert. Alternativ hierzu oder zusätzlich kann auch vorgesehen sein, dass der Abstand der äußersten seitlichen Zinkenringe reduziert ist um so die dort angeordneten Zinken, die bei Kurvenfahrt einer erhöhten Belastung ausgesetzt sein können, zu entlasten.

Die vorliegende Erfindung bezieht sich auch auf eine Erntemaschine, wie Ladewagen, Häcksler, Ballenpresse etc., welche mit einer oben beschriebenen Aufnahmevorrichtung ausgestattet ist. Weiterhin bezieht sich die Erfindung auf ein einzelnes, einen Förderzinken umfassendes, Zinkensegment zur Einbindung in einen Zinkenring.

Weitere Vorteile und Merkmale der Erfindung sind in einem Ausführungsbeispiel anhand der Zeichnung näher erläutert. Die Figuren zeigen:
- Fig. 1: eine Aufnahmevorrichtung, Pick-up genannt, in einer perspektivischen Ansicht;
- Fig. 2: einen Teil der Aufnahmevorrichtung gemäß Fig. 1, in vergrößerter Darstellung;
- Fig. 3: eine Trommel in einer ersten Ausführungsform mit wellenförmig verlaufenden Bohrungen, in einer perspektivischen Ansicht;
- Fig. 4: einen Teil der Trommel gemäß Fig. 3, mit einem Zinkenring, in vergrößerter Darstellung;
- Fig. 5: einen Zinkenring-Satz, in einer perspektivischen Ansicht;
- Fig. 6: den Zinkenring-Satz gemäß Fig. 5, in einer Seitenansicht;
- Fig. 7: den Zinkenring-Satz gemäß Fig. 5, in einer Stirnansicht;
- Fig. 8: den in Fig. 4 gezeigten, flach gelegten Zinkenring;
- Fig. 9: den Zinkenring gemäß Fig. 8, in einer Stirnansicht;
- Fig. 10: den Zinkenring gemäß Fig. 8, in einer perspektivischen Ansicht;
- Fig. 11: ein die Trommel umgebendes Ring-Paar, in einer Seitenansicht auf die Trommel;
- Fig. 12: das Ring-Paar gemäß Fig. 11, in einer perspektivischen Ansicht;
- Fig. 13: ein Zinkensegment des Zinkenringes, in einer Stirnansicht;
- Fig. 14: einen Schnitt A-A gemäß Fig. 13;
- Fig. 15: das Zinkensegment des Zinkenringes, in einer perspektivischen Ansicht;
- Fig. 16: ein Zwischensegment des Zinkenringes, in einer perspektivischen Ansicht;
- Fig. 17: das Zwischensegment gemäß Fig. 16, in einer Stirnansicht;
- Fig. 18: einen Schnitt B-B gemäß Fig. 17;
- Fig. 19: zwei zueinander kompatible Teilringe in einer perspektivischen Ansicht und
- Fig. 20: eine landwirtschaftliche Erntemaschine, in einer schematischen Seitenansicht;
- Fig. 21: eine andere Anordnung der Zinkenringe an der Trommel, mit unterschiedlichen Abständen voneinander, in einer schematischen Seitenansicht;
- Fig. 22: einen einstückigen Zinkenring, in einer Draufsicht auf seine Flachseite;
- Fig. 23: einen einstückigen Zinkenring mit Öffnungsstelle, in einer Draufsicht auf seine Flachseite;
- Fig. 24: eine Trommel in einer zweiten Ausführungsform, in einer perspektivischen Ansicht;
- Fig. 25: eine weitere Ausführungsform einer Aufnahmevorrichtung mit einer Vieleck-Trommel und Abstreifkamm;
- Fig. 26: eine weitere Ausführungsform einer Aufnahmevorrichtung mit einer Vielck-Trommel und umlaufenden Abstreifern;
- Fig. 27: einen Zinkenring für eine Vieleck-Trommel;
- Fig. 28: den Zinkenring gem. Fig. 27 in einer Explosionsdarstellung;
- Fig. 29: eine weitere Ausführungsform eines Zinkenringes mit segementiertem Innenring für eine Vieleck-Trommel;
- Fig. 30: ein Zinkensegment eines Zinkenringes gemäß der Figuren 28 oder 29;
- Fig. 31: eine weitere Ausführungsform eines Zinkensegments;
- Fig. 32: einen Zinkenring mit Zinkensegmenten gemä Fig. 31.

Gleiche oder ähnliche Elemente können in den nachfolgenden Figuren mit gleichen oder ähnlichen Bezugszeichen versehen sein. Ferner enthalten die Figuren der Zeichnung, deren Beschreibung sowie die Ansprüche zahlreiche Merkmale in Kombination. Einem Fachmann ist dabei klar, dass diese Merkmale auch einzeln betrachtet werden oder sie zu weiteren, hier nicht näher beschriebenen Kombinationen zusammengeführt werden können.

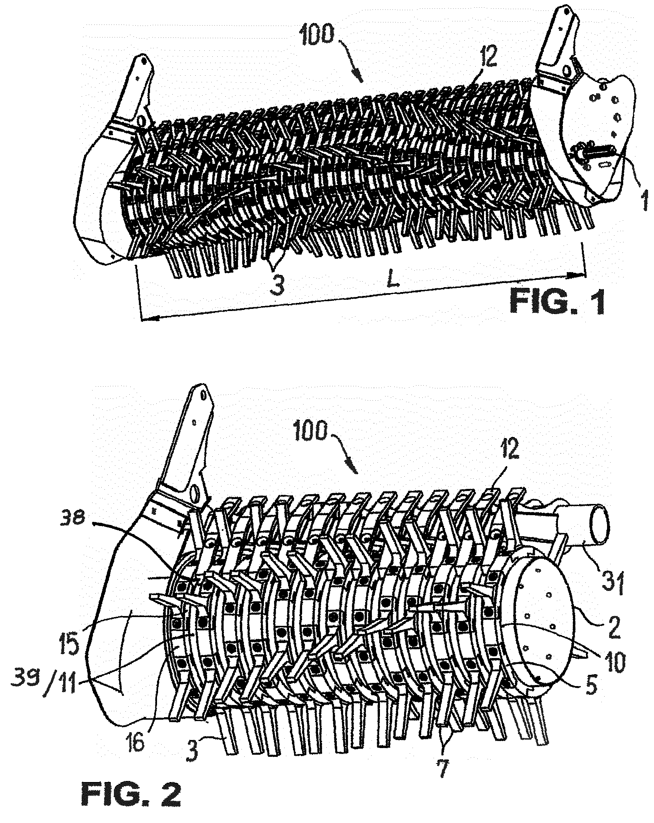

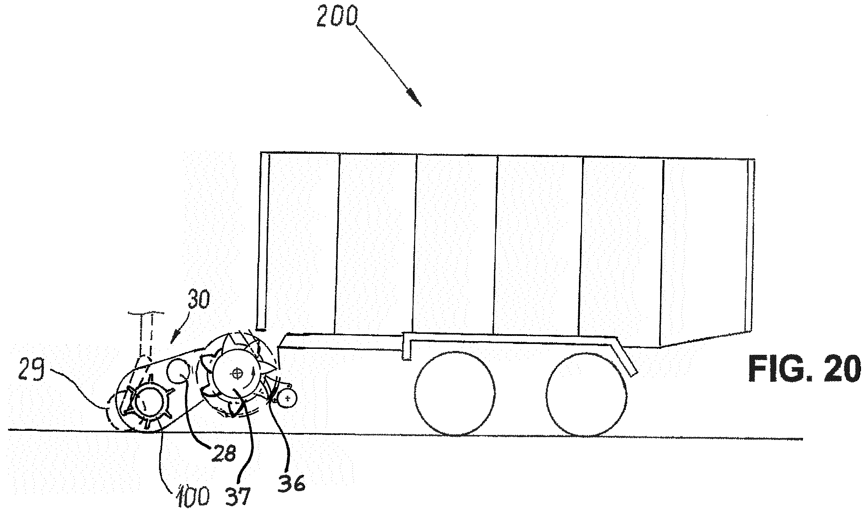

In Fig. 20 ist eine landwirtschaftliche Erntemaschine 200, hier: ein Ladewagen mit einem sogenannten CFS-Ladeaggregat 30 (Continous-Flow-System) dargestellt, enthaltend eine detailliert in den Figuren 1 und 2 gezeigte, erfindungsgemäße Aufnahmevorrichtung 100. Ferner ist mit Bezugszahl 28 eine an sich bekannte Zuführwalze, auch CFS-Beschleunigerwalze genannt, und mit 29 ein Stützrad bezeichnet. Das CFS-Ladeaggregat 30 umfasst weiterhin eine Schneidvorrichtung 36 mit einem Förderrotor 37, einen Rollenniederhalter und Tasträder.

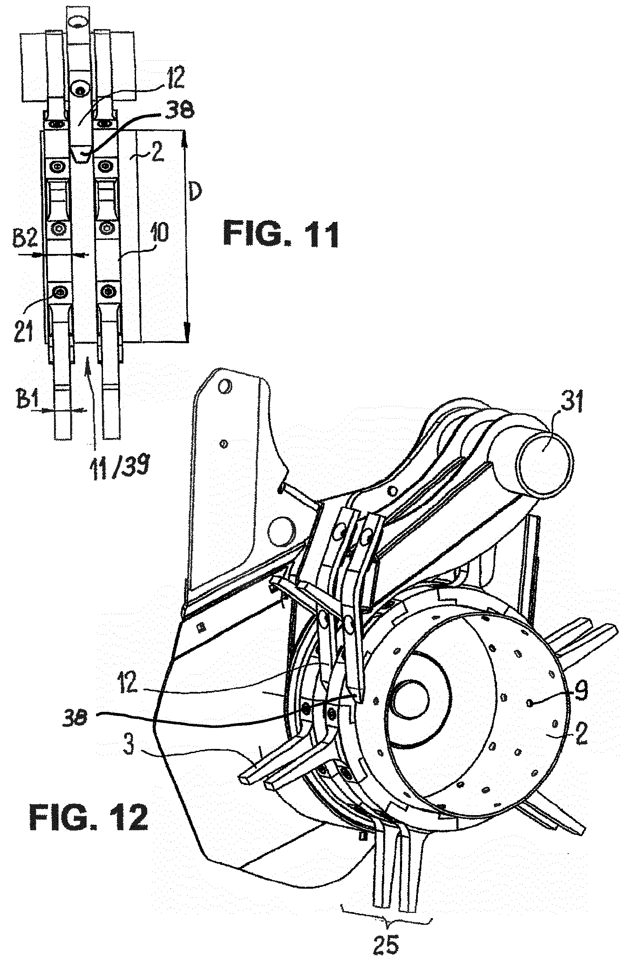

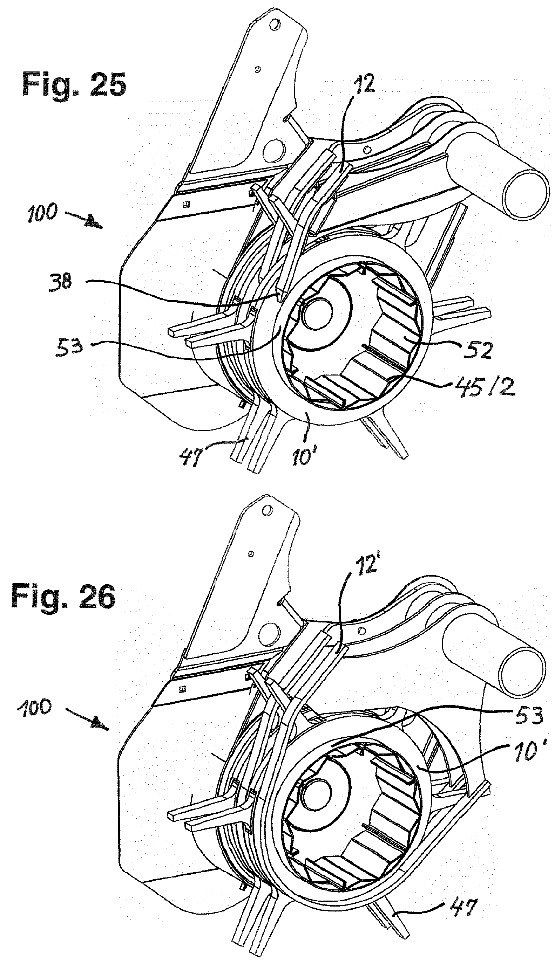

Die Aufnahmevorrichtung 100 umfasst eine längliche, walzenförmige, auf einer Antriebswelle 1 gelagerte Trommel 2, die im in Fig. 2 dargestellte Ausführungsbeispiel rund ist, aber auch eine andere Kontur, insbesondere eine Vieleck-Kontur 45 (vgl. Fig. 25, 26) aufweisen kann. An der Trommel 2 sind über die Mantelfläche 4 ragende Förderzinken 3 angeordnet. Die Förderzinken 3 sind an der Trommel 2 so verteilt, dass sie mehrere nebeneinander voneinander beanstandete Zinkenringe 10 bilden, zwischen denen jeweils ein ringförmiger Zwischenraum 11 angeordnet ist. Der Zwischenraum 11 bildete eine U-förmige, kanalartige Nut 39 aus, in den die Spitze 38 des zinkenförmigen Abstreifers 12 eingreift bzw. eintaucht (vgl. Figuren 2, 11 und 12). Die Abstreifer 12 sind kammartig (vgl. Fig. 2) an einer Welle 31 (vgl. Fig. 12) angeordnet und reichen bis an die Mantelfläche 4 der Trommel 2 heran. Alternativ zu kammartigen Abstreifern 12 können auch die Trommel 2 umschlingende Abstreifer 12' vorgesehen sein (vgl. Fig. 26).

Das von den Förderzinken 3 im Ernteeinsatz aufgenommene Erntegut lagert sich im Wesentlichen auf den Oberflächen 17 der Zinkenringe 10 ab und überbrückt dabei die Zwischenräume 11. Dies hat den Effekt, dass das Erntegut eine teppichartige Struktur ausbildet, die von den die Zwischenräume 11 durchlaufenden Spitzen 38 der Abstreifer 12 leicht und widerstandsarm untergriffen, angehoben und weiter gefördert werden kann.

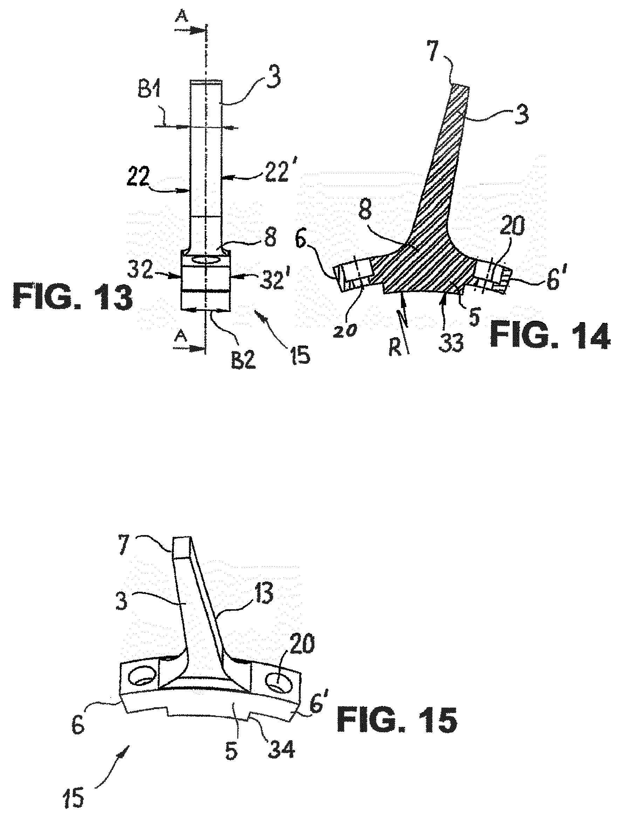

In einer ersten Ausführungsform weist die einzelne, in den Figuren 13, 14 und 15 gezeigte Förderzinke 3 eine abgestumpfte Spitze 7 und eine der Spitze 7 abgewandte Zinkenbasis 8 auf, welche wiederum in einen Sockel 5 übergeht. Die Förderzinke 3 hat im dargestellten Ausführungsbeispiel die Form eines sich in Richtung Spitze 7 verjüngenden, abgestumpften Obelisken 13 (vgl. Fig. 15) mit zwei sich gegenüber liegenden, zueinander parallel angeordneten Seitenflächen 22, 22' (vgl. Fig. 13). Alternativ hierzu kann die Förderzinke aber auch eine andere, beispielsweise runde oder ovale, vorzugsweise sich konisch zur Zinkenspitze hin verjüngende, Form aufweisen.

Wie die Figuren 14 und 15 zeigen, weist der Sockel 5 eine gekrümmte Innenfläche 33 von einem Innenradius R auf, welche über Abstufungen 34 in zwei Schulter 6, 6' übergeht, an denen jeweils eine zweistufige, durchgehende Bohrung 20 eingebracht ist. Die Innenfläche 33 entspricht der Krümmung der Mantelfläche 4 der Trommel 2.
Der Innenradius R1 entspricht etwa einer Hälfte eines Außendurchmessers D (vgl. Fig. 11) der Trommel 2.

Der Sockel 5 und die Förderzinke 3 bilden ein Zinkensegment 15 des die Trommel 2 umgebenden Zinkenringes 10. Das entstandene Zinkensegment 15 besteht aus einem thermoplastischen, elastomeren Kunststoff, wie synthetischer Kautschuk, Gummi oder Harz und ist im dargestellten Ausführungsbeispiel in einem Materialstück als Formteil gefertigt. Alternativ zu der einstückigen Ausführung der Zinkensegmente 15 ist auch eine einen Sockel 5 und einen Förderzinken 3 umfassende zweistückige Ausführung möglich. Bei einer solchen Ausführung ist zwischen Förderzinke 3 und Sockel 5 eine vorzugsweise lösbare Verbindung, beispielsweise in Form einer nicht dargestellten Gewindeverbindung vorgesehen. Die Förderzinken 3 sind geneigt gegenüber dem Sockel 5 (vgl. insbesondere Fig. 14) ausgerichtet.

Weiterhin ist der Fig. 13 zu entnehmen, dass die Förderzinke 3 eine durch die Seitenflächen 22, 22' begrenzte Breite B1 aufweist, welche kleiner als eine Breite B2 des Sockels 5 ist. Die Breite B2 des Sockels 5 ist durch planparallele Seitenflächen 32, 32' begrenzt. Durch die Parallelität der Seitenflächen 32, 32' wird erreicht, dass der Zwischenraum 11 in seinem Querschnitt rechteckig ist (vgl. Figuren 2, 11 und 12) und praktisch keine Freiräume zur Schmutzansammlung bildet, denn der Abstreifer 12 gleitet im Betriebszustand über die Seitenflächen 32, 32' und die Mantelfläche 4 der Trommel 2.

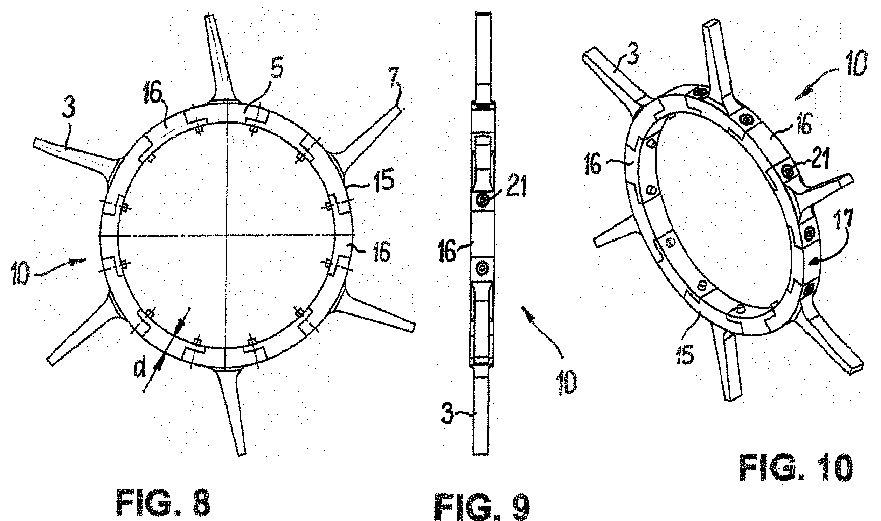

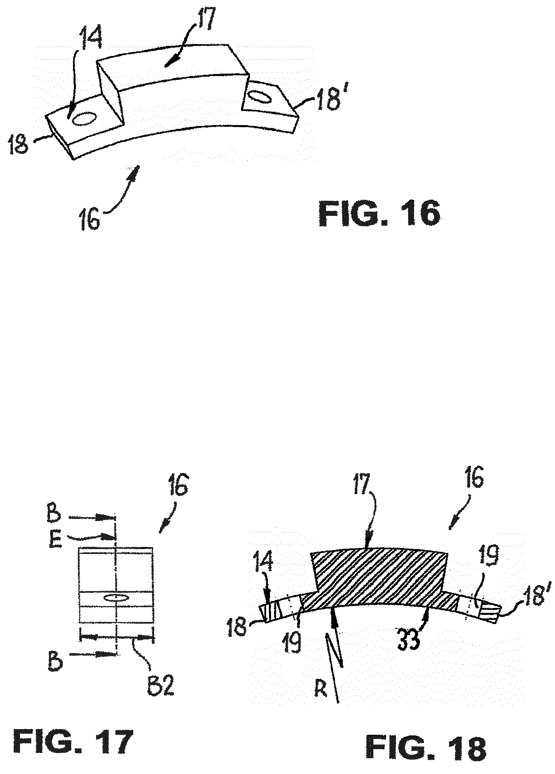

Ferner sind zur Bildung des Zinkenringes 10 (vgl. Figuren 8, 9 und 10) zinkenlose Zwischensegmente 16 vorgesehen. Das einzelne Zwischensegment 16 hat eine zum Zinkensegment 15 kompatible Form, welche sich aus den Figuren 16, 17 und 18 ableiten lässt. Dementsprechend weist das Zwischensegment 16 eine teilzylindrische Innenfläche 33 mit dem Innenradius R (analog zum Segment 15) und dieselbe Breite B2 auf. Die Kompatibilität sichern zwei gegenüber einer gekrümmten Oberfläche 17 des Zwischensegmentes 16 zurückversetzte Arme 18, 18'. Die Krümmung der Oberfläche 17 ist beispielsweise in Fig. 18 zu sehen, welche einen Querschnitt B-B (Ebene E) gemäß Fig. 17 zeigt. Die Arme 18, 18' weisen jeweils eine gekrümmte Auflagefläche 14 auf, an der sich die Schulter 6, 6' des Sockels 5 im zusammengesetzten Zustand des Zinkenringes 10 abstützt.

An jedem Arm 18, 18' ist eine durchgehende Bohrung 19 eingebracht, welche im zusammengesetzten Zustand des Zinkenringes 10 mit der Bohrung 20 des Sockels 5 koinzidiert. Die Bohrung 20 ist zweistufig ausgeführt, so dass eine Verschraubung mittels einer Senkkopfschraube 21, vorzugsweise mit Innensechstkant, (vgl. Figuren 8, 9 und 10) ermöglicht ist und der Schraubenkopf im montierten Zustand die Oberfläche 17 des Zinkenrings 10 nicht überragt. Der Zinkenring 10, weist eine geschlossene Kontur mit einer im Wesentlichen konstanten Dicke d auf, aus der die Förderzinken 3 hervorragen (vgl. Fig. 8).

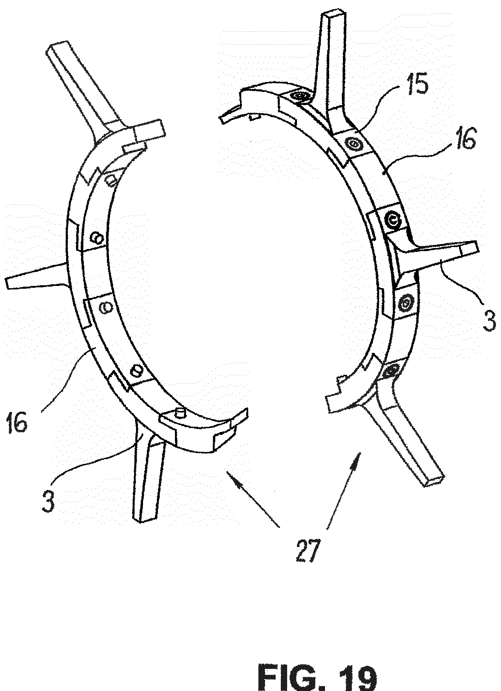

In Fig. 19 sind vormontierte Teilringe 27 bzw. Halbringe gezeigt, mit denen sich eine schnelle Montage der einzelnen Zinkenringe 10 an der Trommel 2 verwirklichen lässt. Die Verbindung der einzelnen Zinkensegmente 15 und Zwischensegmente 16 miteinander zu einem Teilring 27 ist beispielsweise möglich, indem die Bohrungen 19 an den Armen 18, 18' des Zwischensegmentes 16 mit Gewinde (nicht dargestellt) für die Senkkopfschraube 21 versehen sind. Die Zinkensegmente 15 und Zwischensegmente 16 eines Teilrings 27 können aber auch miteinander verklebt sein. Alternativ zu dem in Fig. 19 dargestellten Beispiel, bei dem die Teilringe aus Einzelsegmenten vormontiert worden sind, können die Teilringe selbst auch einstückig hergestellt sein.

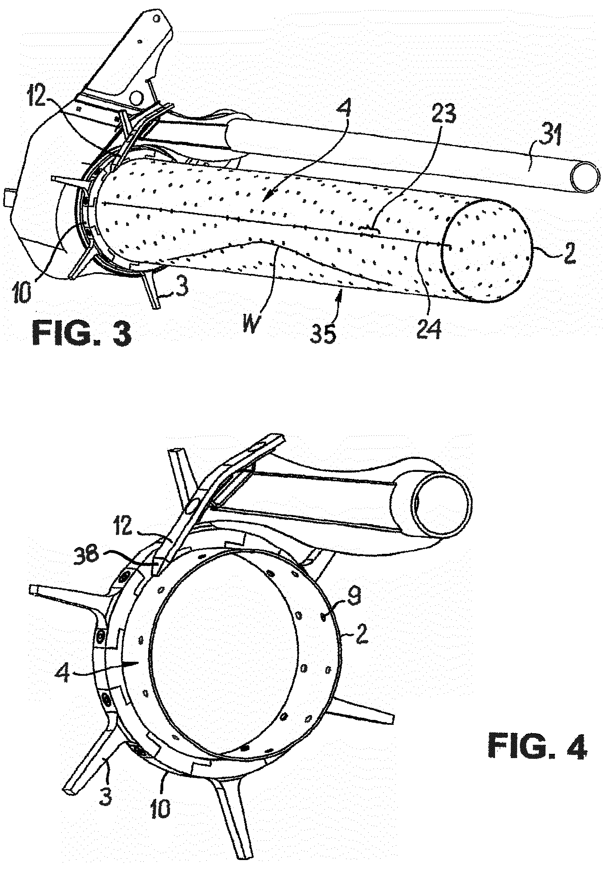

Wie Figuren 3, 4 und 24 zeigen, sind an der Trommel 2 zahlreiche Bohrungen 9 eingebracht, welche die Austauschbarkeit der Zinkenringes 10, des Teilringes 27 oder des einzelnen Segmentes 15 erleichtern.

Die Schraubverbindungen an dem Teilring 27 können zum Zwecke der Teilring-Vormontage zunächst etwas gelockert sein und erst nach Einführung der über die Innenfläche 33 der Segmente 15 und Zwischensegmente 16 ragenden Enden der Senkkopfschrauben 21 in die Bohrungen 9 an der Trommel 2 fixiert werden.

Die Bohrungen 9 an der Trommel 2 können mit oder ohne Gewinde ausgeführt sein. Im Falle gewindeloser Bohrungen 9 werden nur die Zinkensegmente 15 und Zwischensegmente 16 miteinander zu einem Teilring 27 oder Zinkenring 10 verschraubt und die Senkkopfschrauben 21 in die Bohrungen 9 - eine formschlüssige Verbindung bildend - eingelassen.

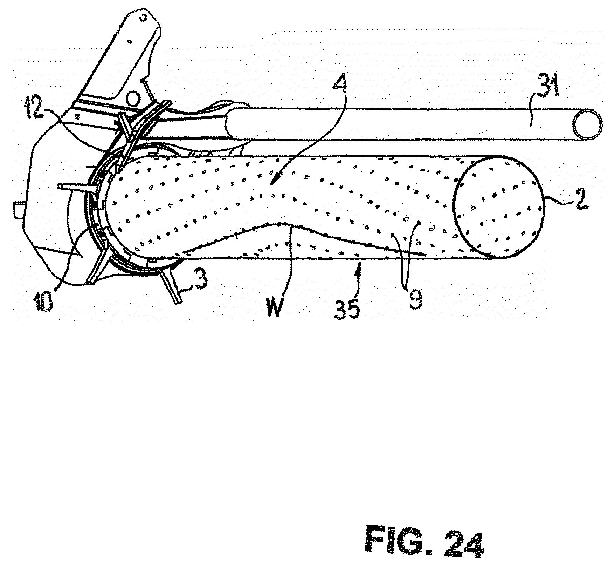

Die Anordnung der Bohrungen 9 an der Trommel 2 ist detailliert in Fig. 3 und 24 dargestellt. Die Bohrungen 9 sind im dargestellten Ausführungsbeispiel wellen- bzw. spiralartig an einer ganzen Trommellänge L derart verteilt, dass sie zahlreiche Bohrungs-Paare 23 bilden, welche jeweils entlang einer Mantellinie 24 der Trommel 2 liegen. Insgesamt stellen die Bohrungs-Paare 23 eine die ganze Mantelfläche 4 der Trommel 2 umfassende Bohrung-Matrix 35 dar, bestehend aus mehreren etwa sinusoidal verlaufenden Windungslinien W. Abgesehen von Bohrung-Paaren 23 können die Bohrungen 9 nacheinander liegend längs der jeweiligen Windungslinie W angeordnet sein. Eine solche Anordnung von Bohrungen 9 zeigt die Fig. 24. Nicht ausgeschlossen ist jedoch, dass die Förderzinken 3 nicht in Windungslinien, sondern linear, auf der Trommel angeordnet sind.

Gemäß Figuren 11 und 12 sind an der Trommel 2 Ring-Paare 25 aufmontiert, deren Anordnung an der Trommel 2 der Anordnung des Bohrung-Paares 23 entspricht. Die paarweise Anbringung der Zinkenringe 10 führt zu einer günstigen Lastverteilung auf die Einzelzinken 3.

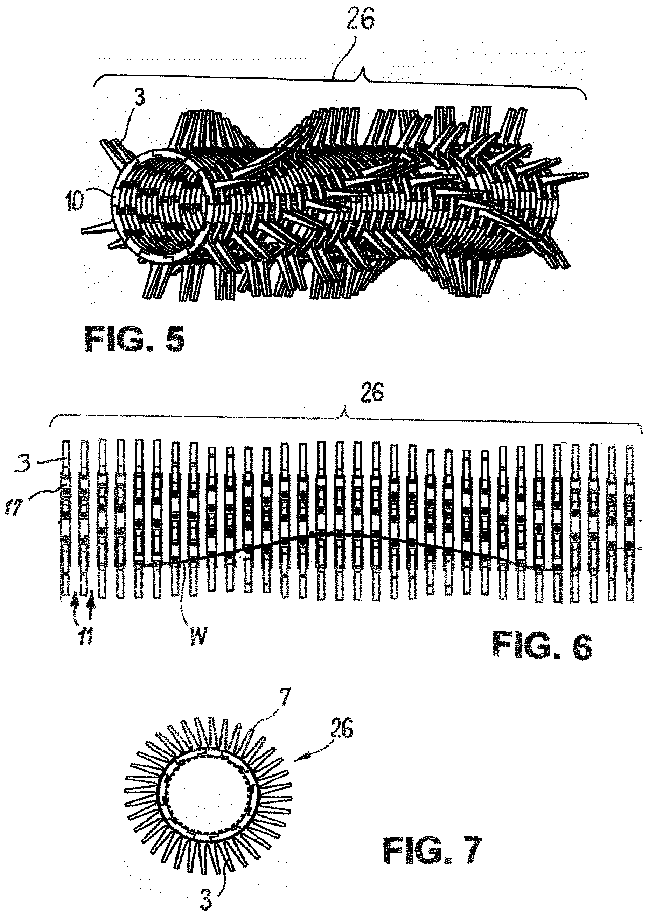

In den Figuren 5 bis 7 ist ein Ring-Satz 26 ohne Trommel 2 dargestellt um die Anordnung der Bohrung-Matrix 35 unm der Zinkenringe 10 zu veranschaulichen. Der Fig. 5 lässt sich besonders gut der spiralförmige Verlauf der Förderzinken 3 und die Segmentierung der Zinkenringe 10 entnehmen. Der spiralförmige Verlauf der Förderzinken 3 reduziert Lastspitzen, die bei linearer Anordnung auftreten könnten. Weiterhin hat der spiralförmige Verlauf der Förderzinken 3 eine von der Mitte nach außen gerichtete Förderwirkung. Hierdurch wird ein aufzunehmender Erntegut-Schwad, der in der Regel von der Schwadmitte zu den Seiten hin abfällt, zumindest etwas egalisiert.

Gemäß der Figuren 1 und 6 verlaufen die Förderzinken 3, in mehreren Reihen verteilt, spiral- bzw. wellenartig an der Trommel 2 und bilden dort Windungslinien W mit dem zu transportierenden Erntegut.

Es sei angemerkt, dass im dargestellten Ausführungsbeispiel nicht nur die Zinkensegmente 15, sondern auch die Zwischensegmente 16 und die zinkenförmigen Abstreifer 12 aus Kunststoff gefertigt sind.

Die Zinkensegmente 15 und Zwischensegmente 16, bzw. die Teilringe 27 sind lösbar an der Trommel 2 befestigt. Dies ermöglicht nicht nur die Montage oder Demontage des ganzen Zinkenringes 10 an der Trommel 2, sondern nach Bedarf auch ein einfaches, blitzschnelles Auswechseln des Zinkensegmentes 15 oder Teilrings 27, wenn beispielsweise eine Förderzinke 3 beschädigt ist.

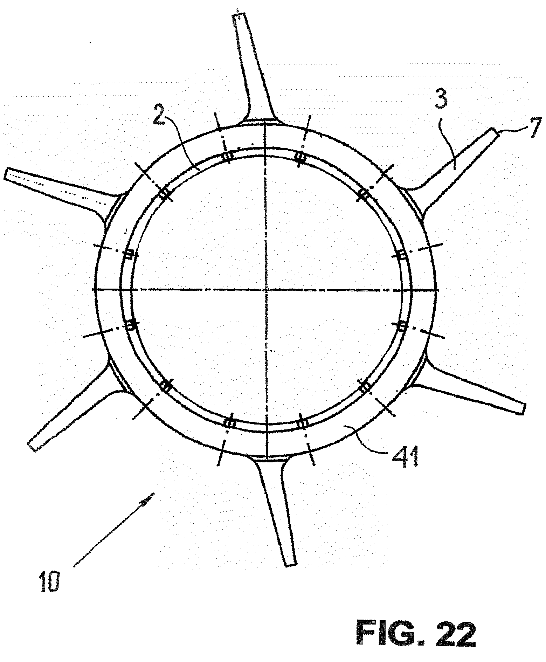

Der Zinkenring 10 gemäß Fig. 22 ist einstückig als Formteil aus Polyurethan (PUR) gefertigt. Solche Zinkenringe 10 werden hintereinander auf die Trommel 2 aufgeschoben und dort nach vorgegebener Winkeleinstellung mittels Senkkopfschrauben fixiert. Zu diesem Zweck sind an einer Basis 41 des Zinkenringes 10 radial gerichtete Bohrungen 42 vorgesehen. Der Zinkenring 10, insbesondere seine Basis 41 lässt sich wegen ihrer Elastizität und Rückstellungskraft bei der Montage an der Trommel etwas radial ausdehnen.

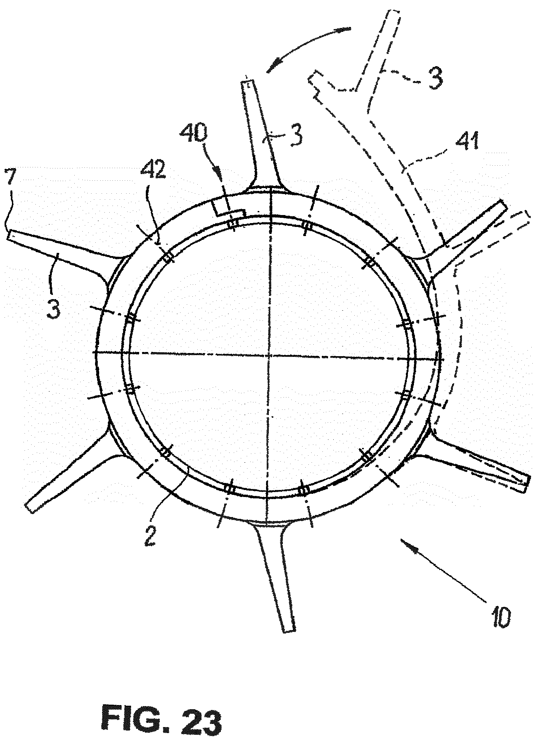

Gemäß Fig. 23 ist der Zinkenring 10 einstückig aus einem federnd elastischen Kunststoff, bevorzugt aus Polyurethan (PUR) gefertigt. Eine Besonderheit dieses Zinkenringes ist eine an der Basis 41 eingebrachte Öffnungsstelle 40, die es ermöglicht, den Zinkenring umzustülpen und damit die Montage an der Trommel 2, bzw. das Auswechseln, leichter zu machen. Die Öffnungsstelle 40 lässt sich mit der in die Bohrung 42 eingeführten Senkkopfschraube schließen.

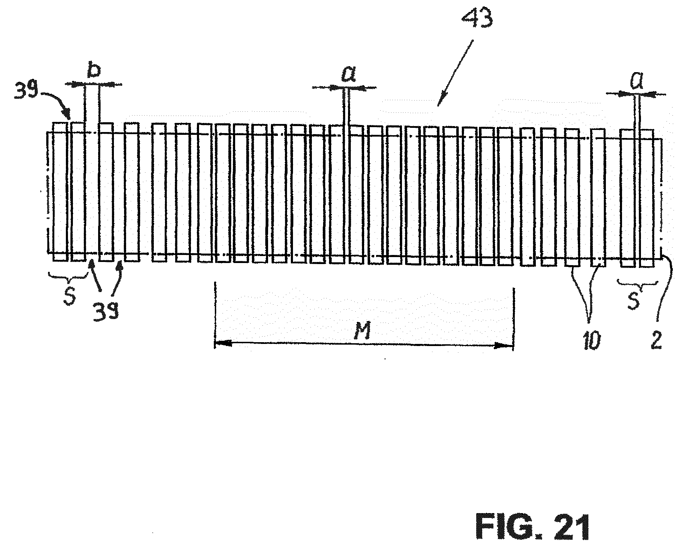

Der Fig. 21 ist eine besondere Anordnung 43 der Zinkenringe 10 an der Trommel 2 zu entnehmen. Hierbei sind die Zinkenringe 10 zeichnerisch ohne Förderzinken vereinfacht dargestellt. Die Anordnung 43 zeigt einen Mittelbereich M, in dem die Zinkenringe 10 in einem gleichen Abstand a voneinander liegen. Außerhalb des Mittelbereichs M sind die Zinkenringe 10 in vergrößerten Abständen b voneinander angeordnet. Mit S sind Randbereiche bezeichnet, in denen die äußerst seitlich angeordneten Zinkenringe 10 jeweils in kleineren Abständen voneinander, gegebenenfalls in Abständen a, liegen. Dank dem kleineren Abstand a können die im Randbereich liegenden Zinkenringe 10 den erhöhten Belastungen bei Kurvenfahrt besser stand halten.

Die Figuren 25 und 26 zeigen jeweils weitere Ausführungsformen einer erfindungsgemäßen Aufnahmevorrichtung 100. Beide Aufnahmevorrichtungen 100 weisen eine Trommel 2 mit einer Vieleckkontur 45 auf. Das Vieleck ist sternförmig und hat im dargestellten Beispiel zwölf nach innen und zwölf nach außen weisende Ecken. Die Trommel 2 ist aus sechs gekanteten Blechsegmenten 52 gefertigt.

Die Trommel 2 ist umgeben von Zinkenringen 10', zwischen denen jeweils ein Abstandsring 53 angeordnet ist. Die Flanken der Zinkenringe 10' und die Oberfläche der Abstandsringe 53 bilden analog zu der u.a. in Fig. 2 dargestellten Ausführungsform U-förmige Zwischenräume 11 für die Abstreifer 12 (Fig. 25) bzw. 12' (Fig. 26) aus. Die Ausführungsformen der Figuren 25 und 26 unterscheiden sich somit durch die Art der verwendeten Abstreifer: Während die in Fig. 25 vorgesehenen Abstreifer 12 in Spitzen 38 auslaufen und einen Kamm bilden, weisen die in Fig. 26 dargestellten Abstreifer eine die Trommel 2 umschlingende Kontur 46 auf.

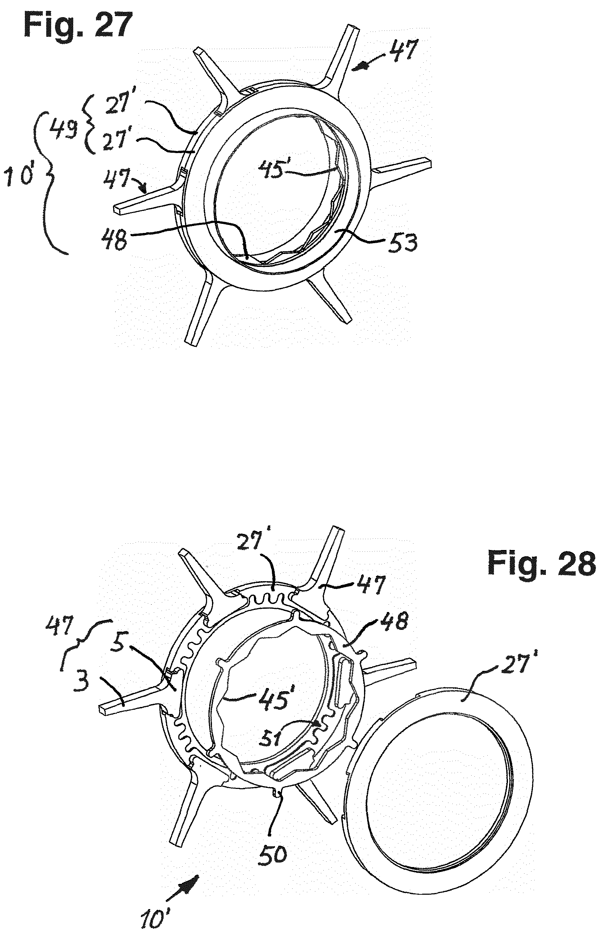

Die in den Figuren 25 und 26 gezeigten Zinkenringe 10' sind in den Figuren 27 und 28 im Detail dargestellt. Der Zinkenring 10' umfasst einen Außenring 49, der durch zwei miteinander verbundene Teilringe 27' gebildet wird. Weiterhin umfasst der Zinkenring 10' sechs Zinkensegmente 47 sowie einen Innenring 48. Die Teilringe 27' sowie die Zinkensegmente 47 sind aus Polyurethan hergestellt. Die Teilringe 27' und damit der Außenring 49 weisen Aussparungen 57 zur Aufnahme der Sockel 5 der Zinkensegmente 47 auf. Die Sockel 5 werden in den Aussparungen 57 formschlüssig aufgenommen.

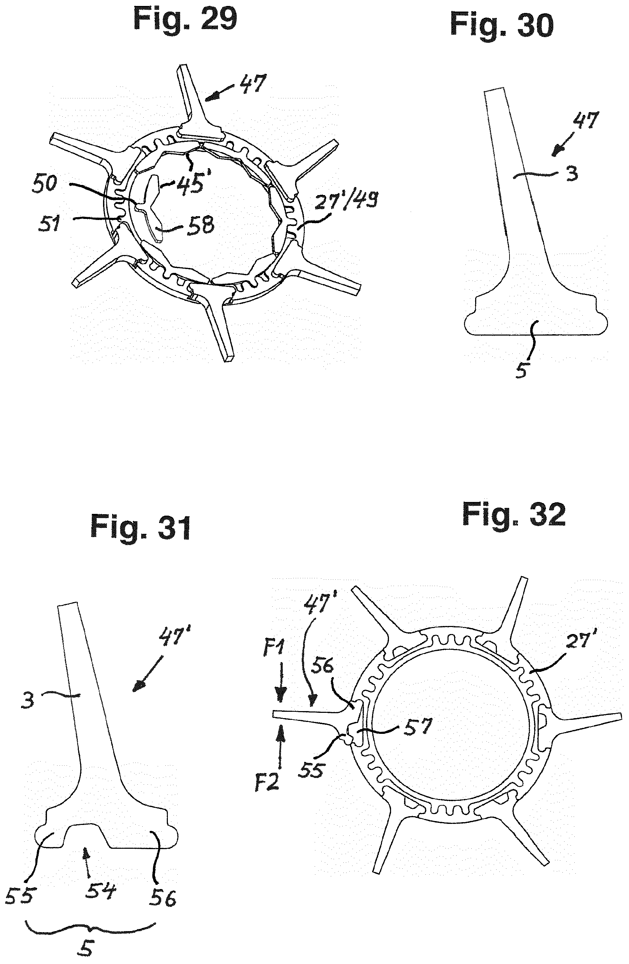

Die Zinkensegmente 47 sind im Zinkenring 10' austauschbar. Das heißt: ein beschädigtes oder verschlissenes Zinkensegment 47 kann bei Bedarf aus dem Zinkenring 10' entnommen und durch ein neues Zinkensegment 47 ersetzt werden. Im Arbeitseinsatz, das heißt, bei Förderung von Erntegut, werden die Förderinken 3 in einer Richtung F1 belastet (vgl. Fig. 32). Der Sockel 5 ist so konzipiert, dass er sich bei Einwirken einer Kraft in Richtung F1 gegen den Zinkenring 10' abstützt und nicht aus der Aussparung 57 herausgedrückt werden kann. Bei umgekehrter Krafteinwirkung in Richtung F2 ermöglicht die Elastizität des Sockelmaterials eine Verformung, die ausreicht, um das Zinkesegment 47 zu demontieren bzw. auszutauschen.

Eine verbesserte Austauschbarkeit wird durch den Einsatz von Zinkensegementen 47' erreicht (vgl. Fig. 31 und 32) Die Zinkensegemente 47' weisen an der Unterseite des Sockels 5 eine Nut 52 auf, die den Sockel in zwei Ausleger 55, 56 unterteilt. Der Ausleger 55 ist relativ schmal und dementsprechend leicht verformbar. Eine Verformung des Auslegers 55 findet jedoch nur dann statt, wenn der Förderzinken 47' in Richtung f2 belastet wird.

Fig. 28 verdeutlicht zudem den Aufbau des aus Stahl hergestellten Innenrings 48. Der Innenring 48 weist eine zur Vieleckkontur 45 der Trommel 2 (Fig. 25, 26) kompatible Vieleckkontur 45' auf. Weiterhin weist der Innenring 48 nasenartige Konturelemente 50 auf, die in kompatible Konturelemente 51 des Außenringes 49 eingreifen können. Im dargestellten Ausführungsbeispiel sind zwischen jeweils zwei Aussparungen 57 jeweils drei Konturelemente 51 vorgesehen. Dadurch kann der Innenring 48 relativ zum Außenring 49 in drei verschiedenen Stellungen angebracht werden. Selbstverständlich sind auch andere Teilungen möglich.

Die Position der Förderzinken 3 gegenüber der Trommel 2 kann somit zum einen dadurch variiert werden, dass der Zinkenring 10', bzw. dessen Vieleckprofil 45', durch schrittweises Drehen vor der Montage zunächst in eine gewünschte Position gegenüber der Trommel 2 ausgerichtet wird. Diese Variationsmöglichkeit wird weiterhin vervielfacht, indem zudem die Lage des Innenrings 48 gegenüber dem Außenring 49 mittels der Konturelemente 50, 51 variabel ist. Die beschriebenen Ausrichtoptionen ermöglichen die Anordnung der Förderzinken 3 auf der Trommel 2 in einer Vielzahl von Posiitonen. Wie bereits weiter oben im Zusammenhang mit Fig. 24 erläutert, können die Förderzinken 3 auf der Trommel 2 zu Windungslinien W ausgerichtet und so individuellen Anforderungen angepasst werden.

Der in den Figuren 27 und 28 gezeigte Innenring 48 kann unlösbar, beispielsweise durch Einkleben oder Eingießen, mit dem Außenring 49 verbunden sein. Alternativ dazu ist es auch möglich, den Außenring 49, der eine gewisse Elastizität aufweist, ähnlich einer Verbindung zwischen Reifen und Felge auf den im Wesentlichen starren Innenring 48 aufzuziehen. Um diese Montagearbeit zu erleichtern, kann vorgesehen sein, dass der Innenring 48 nicht einstückig ausgebildet ist, sondern eine Anzahl von Teilsegmenten 58 umfasst. Bei dem in Fig. 29 dargestellten Ausführungsbeispiel sind sechs Teilsegmente 58 vorgesehen, die ohne Verformung des Außenringes 49 an die vorgesehen Position montierbar sind. Nachdem ein solcher Zinkenring 10' auf einer Trommel 2 montiert ist, stützen die Teilsegmente sich sowohl in der dafür vorgesehen Kontur des Außenringes als auch - nach innen hin - gegen die Trommel 2 ab und werden so sicher fixiert.

**Bezugszeichenliste:**

| | | | |
|---|---|---|---|
| 1 | Antriebswelle | 31 | Welle (v. 12) |
| 2 | Trommel | 32, 32' | Seitenfläche (v. 5) |
| 3 | Förderzinke | 33 | Innenfläche (v. 5) |
| 4 | Mantelfläche v. 2 | 34 | Abstufung |
| 5 | Sockel | 35 | Bohrung-Matrix |
| 6, 6' | Schulter v. 5 | 36 | Schneidvorrichtung |
| 7 | Spitze v. 3 | 37 | Förderrotor |
| 8 | Zinkenbasis | 38 | Spitze (v. 12) |
| 9 | Bohrung | 39 | Nut |
| 10, 10', | Zinken-Ring | 40 | Öffnungsstelle |
| 11 | Zwischenraum | 41 | Basis |
| 12, 12' | Abstreifer | 42 | Bohrung |
| 13 | Obelisk | 43 | Anordnung |
| 14 | Auflagefläche | 44 | - |
| 15 | Zinkensegment | 45, 45' | Vieleckkontur |
| 16 | Zwischensegment | 46 | Kontur (von 12') |
| 17 | Oberfläche | 47, 47' | Zinken |
| 18, 18' | Arm v. 16 | 48 | Innenring |
| 19 | Bohrung v. 18 | 49 | Außenring |
| 20 | Bohrung (zweistufig) | 50 | Konturelement (von 48) |
| 21 | Senkkopfschraube mit Innensechskant | 51 | Konturelement (von 49) |
| 22, 22' | Seitenfläche (v. 3) | 52 | Trommelsegment |
| 23 | Bohrungs-Paar | 53 | Abstandsring |
| 24 | Mantellinie v. 2 | 54 | Nut |
| 25 | Ring-Paar | 55 | Ausleger |
| 26 | Ring-Satz | 56 | Ausleger |
| 27 | Teilring | 57 | Aussparung |
| 28 | Zuführwalze | 58 | Teilsegment |
| 29 | Stützrad | 100 | Aufnahmevorrichtung |
| 30 | CFS-Ladeaggregat | 200 | Erntemaschine |
| A - A | Schnitt | | |
| B - B | Schnitt | | |
| B1, B2 | Breite (v. 3; 5) | | |
| a | Abstand | | |
| b | Abstand | | |
| d | Dicke v. 10 | | |
| D | Außendurchmesser (v. 2) | | |
| E | Ebene | | |
| L | Trommellänge | | |
| M | Mittelbereich | | |
| S | Randbereich | | |
| R | Innenradius v. 15 und 16 | | |
| W | Windungslinie | | |
| F1 | Richtung | | |
| F2 | Richtung | | |

## Patentansprüche

1. Drehbare, in eine landwirtschaftliche Erntemaschine eingebaute oder einbaubare Aufnahmevorrichtung (100) für Erntegut, umfassend:
- eine walzenförmige Trommel (2),
- eine Vielzahl von an der Trommel (2) angeordneten, über eine Mantelfläche (4) der Trommel (2) abstehenden, aus elastischem Kunststoff bestehenden Förderzinken (3), welche jeweils eine Spitze (7) und eine der Spitze (7) abgewandte Zinkenbasis (8) aufweisen,
- wobei die Förderzinken (3) an der Trommel (2) derart verteilt sind, dass sie mehrere nebeneinander liegende, voneinander beanstandete Zinken-Ringe (10; 10') bilden,
- wobei zwischen sich benachbarten Zinken-Ringen (10; 10') Zwischenräume (11) zur Aufnahme von Abstreifern (12; 12') vorgesehen sind,
**dadurch gekennzeichnet, dass**
- die Förderzinke (3) mit ihrer Zinkenbasis (8) in einen Sockel (5) ausläuft,
- je Zinkenring (10; 10') wenigstens zwei Förderzinken (3) vorgesehen sind, deren Sockel (5) eine ringförmig geschlossene Kontur des Zinkenrings (10; 10') ausbilden, oder in eine ringförmig geschlossene Kontur des Zinkenrings (10; 10') integriert sind,
- die Zwischenräume (11) umlaufende Nuten (39) bilden, in denen die Abstreifer (12, 12') geführt werden.

2. Aufnahmevorrichtung (100) nach Anspruch 1, **dadurch gekennzeichnet, dass** die Abstreifer (12) jeweils eine Spitze (38) aufweisen.

3. Aufnahmevorrichtung (100) nach Anspruch 1, **dadurch gekennzeichnet, dass** die Abstreifer (12') eine die Trommel (2) umschlingende Kontur (46) aufweisen.

4. Aufnahmevorrichtung (100) nach einem der Ansprüche 1 bis 3, **dadurch gekennzeichnet, dass** der Zinkenring (10; 10') lösbar an der Trommel (2) befestigt ist.

5. Aufnahmevorrichtung (100) nach einem der Ansprüche 1 bis 4, **dadurch gekennzeichnet, dass** der Zinkenring (10; 10') wenigstens zwei miteinander montierbare Teilringe (27, 27') umfasst.

6. Aufnahmevorrichtung (100) nach einem der Anspürche 1 bis 5, **dadurch gekennzeichnet, dass** der Zinkenring (10; 10') Zinkensegemente (15; 47; 47') umfasst, welche jeweils wenigstens einen Förderzinken (3) und einen Sockel (5) aufweisen.

7. Aufnahmevorrichtung (100) nach Ansprüche 6, **dadurch gekennzeichnet, dass** die Zinkensegmente (15; 47; 47') lösbar mit dem Zinkenring (10; 10') verbindbar sind.

8. Aufnahmevorrichtung (100) nach einem der vorhergehenden Ansprüche, **dadurch gekennzeichnet, dass** die Zinkensegmente (15, 47, 47') und/oder im Zinkenring (10; 10') enthaltene zinkenlose Zwischensegmente (16) aus einem elastomeren synthetischen Material, bevorzugt Polyurethan (PUR) gefertigt sind.

9. Aufnahmevorrichtung (100) nach einem der vorhergehenden Ansprüche, **dadurch gekennzeichnet, dass** die Zinkenringe (10; 10') auf der Trommel (2) unterschiedlich weit voneinander beabstandet sind.

10. Aufnahmevorrichtung (100) nach einem der vorhergehenden Ansprüche , **dadurch gekennzeichnet, dass** an der Trommel (2) Bohrungen (9) zur Befestigung der Zinkenringe (10) eingebracht sind.

11. Aufnahmevorrichtung (100) nach einem der vorhergehenden Ansprüche , **dadurch gekennzeichnet, dass** die Trommel (2) eine Vieleckkontur (45) aufweist.

12. Aufnahmevorrichtung (100) nach einem der vorhergehenden Ansprüche, **dadurch gekennzeichnet, dass** der Zinken-Ring (10') eine zur Vieleckkontur (45) der Trommel (2) kompatible Vieleckkontur (45') aufweist und Zinkenring (10') und Trommel (2) formschlüssig miteinander verbindbar sind.

13. Aufnahmevorrichtung (100) nach einem der vorhergehenden Ansprüche, **dadurch gekennzeichnet, dass** der Zinken-Ring (10') einen Innenring (48) und einen Außenring (49) umfasst und dass der Innenring (48) Konturelemente (50) und der Außenring (49) Konturelemente (51) aufweist, die zueinander kompatibel sind.

14. Erntemaschine (200), umfassend eine Aufnahmevorrichtung (100) gemäß einem der Ansprüche 1 bis 13.

15. Zinkensegment (15, 47, 47') für einen Zinkenring (10; 10') umfassend eine Förderzinke (3) mit einer Zinkenbasis (8) und einem Sockel (5).
